# EUROPEAN PATENT SPECIFICATION

(11) **EP 2 894 570 B1**
(45) Date of publication and mention of the grant of the patent: **15.03.2017**
(21) Application number: 15151101.1
(22) Date of filing: 14.01.2015
(51) Int. Cl.: G06F 13/38, G06F 1/32

(54) **Information processing apparatus that suppresses power consumption and method for controlling the same, and storage medium**
Informationsverarbeitungsvorrichtung zur Unterdrückung des Leistungsverbrauchs und Verfahren zu seiner Steuerung sowie Speichermedium
Appareil de traitement d'informations qui supprime la consommation d'énergie et son procédé de commande, et support de stockage

(30) Priority: 14.01.2014 JP 2014004243; 26.12.2014 JP 2014265132
(43) Date of publication of application: 15.07.2015
(73) Proprietor: CANON KABUSHIKI KAISHA, Ohta-ku Tokyo 146-8501 (JP)
(72) Inventor: Hirano, Yasuhiko, Ohta-ku, Tokyo (JP)
(74) Representative: Hitching, Peter Matthew

(56) References cited:
- EP-A1- 2 234 325
- US-A1- 2012 324 261
- US-A1- 2013 268 789
- US-B1- 6 839 778

## Description

### BACKGROUND OF THE INVENTION

### Field of the Invention

The present invention relates to an information processing apparatus that suppresses power consumption and a method for controlling the same, and a storage medium.

### Description of the Related Art

A host apparatus serving as an upper apparatus such as a general personal computer and an image forming apparatus serving as a lower apparatus are connectable to each other via a Universal Serial Bus (USB). In recent years, USB 3.0 having an improved data communication speed has spread as a USB standard. USB 3.3 has lower compatibility. An apparatus corresponding to USB 3.0 also corresponds to USB 2.0. Therefore, the apparatus corresponding to USB 3.0 corresponds to Super Speed (a data communication speed of a maximum of 5 Gbps, which is hereinafter referred to as "SS") of USB 3.0 and High Speed (a data communication speed of a maximum of 480 Mbps, which is hereinafter referred to as "HS") of USB 2.0.

Thus, SS enables data transfer at a higher speed than HS. Therefore, power consumption of a physical layer circuit (hereinafter referred to as "PHY") corresponding to SS is larger than power consumption of a PHY corresponding to HS. Therefore, to reduce the power consumption, control for shifting to a sleep state serving as a state where the power consumption is reduced has been performed if there is no operation request over a predetermined time period or more in the image forming apparatus.

In recent years, a power saving request has further increased, so that power needs to be reduced in the sleep state. Thus, a technique for reducing power consumption of a USB interface in a sleep state is proposed (see Japanese Laid-Open Patent Publication (Kokai) No. 2009-93419).

However, in an information processing apparatus disclosed in Japanese Laid-Open Patent Publication (Kokai) No. 2009-93419, power to the USB interface is shut off in the sleep state. Thus, communication becomes impossible. In the information processing apparatus, power consumption is strongly required to be suppressed during normal use.

US 2012/0324261 is disclosing a Universal serial bus (USB) 3.0 compatible host with lower operation power consumption and method for reducing operation power consumption of a USB 3.0 compatible host.

### SUMMARY OF THE INVENTION

The present invention provides, in embodiments, an information processing apparatus capable of performing communication in a power saving state while being capable of suppressing power consumption and a method for controlling the same, and a storage medium.

Accordingly, a first aspect of the present invention provides an information processing apparatus as specified in claims 1 to 5.

Accordingly, a second aspect of the present invention provides a method for controlling an information processing apparatus as specified in claim 6.

Accordingly, a third aspect of the present invention provides a non-transitory computer readable storage medium storing a program for causing a computer to implement a method for controlling an information processing apparatus as specified in claim 7.

According to embodiments of the present invention, when the information processing apparatus is in a normal use state, supply of power to a functional block in the communication mode in which communication is not performed is stopped, so that power consumption can be suppressed. On the other hand, when the information processing apparatus is in a power saving state, connection in the second communication mode at a low speed is maintained, so that communication can be performed even in the power saving state and power consumption can be suppressed.

Further preferred features of the present invention will become apparent from the following description of exemplary embodiments (with reference to the attached drawings).

### BRIEF DESCRIPTION OF THE DRAWINGS

FIG. 1 is a diagram showing a schematic configuration of an information processing system including a multifunction peripheral (MFP) as an information processing apparatus according to an embodiment of the present invention and a schematic configuration of the MFP.
FIG. 2 is a diagram showing a schematic configuration of a USB interface according to a first embodiment provided in the MFP shown in FIG. 1.
FIG. 3 is a timing chart of signals A, B, C, and D shown in FIG. 2.
FIG. 4 is a sequence diagram showing a procedure performed when the MFP including the USB interface shown in FIG. 2 shifts to a sleep state.
FIG. 5 is a sequence diagram showing a procedure performed when the MFP including the USB interface shown in FIG. 2 returns from the sleep state.
FIG. 6 is a flowchart of sleep shifting processing performed by a central processing unit (CPU) in the MFP including the USB interface shown in FIG. 2.
FIG. 7 is a flowchart of sleep return processing performed by the CPU in the MFP including the USB interface shown in FIG. 2.
FIG. 8 is a diagram showing a schematic configuration of a USB interface according to a second embodiment included in the MFP shown in FIG. 1.
FIG. 9 is a flowchart of processing after cable connection of the USB interface shown in FIG. 8.
FIG. 10 is a flowchart of first sleep shifting processing performed by a CPU in the MFP including the USB interface shown in FIG. 8.
FIG. 11 is a flowchart of first sleep return processing performed by the CPU in the MFP including the USB interface shown in FIG. 8.
FIG. 12 is a flowchart of second sleep shifting processing performed by the CPU in the MFP including the USB interface shown in FIG. 8.
FIG. 13 is a flowchart of second sleep return processing performed by the CPU in the MFP including the USB interface shown in FIG. 8.

### DESCRIPTION OF THE EMBODIMENTS

An embodiment of the present invention will be described in detail below with reference to the drawings.

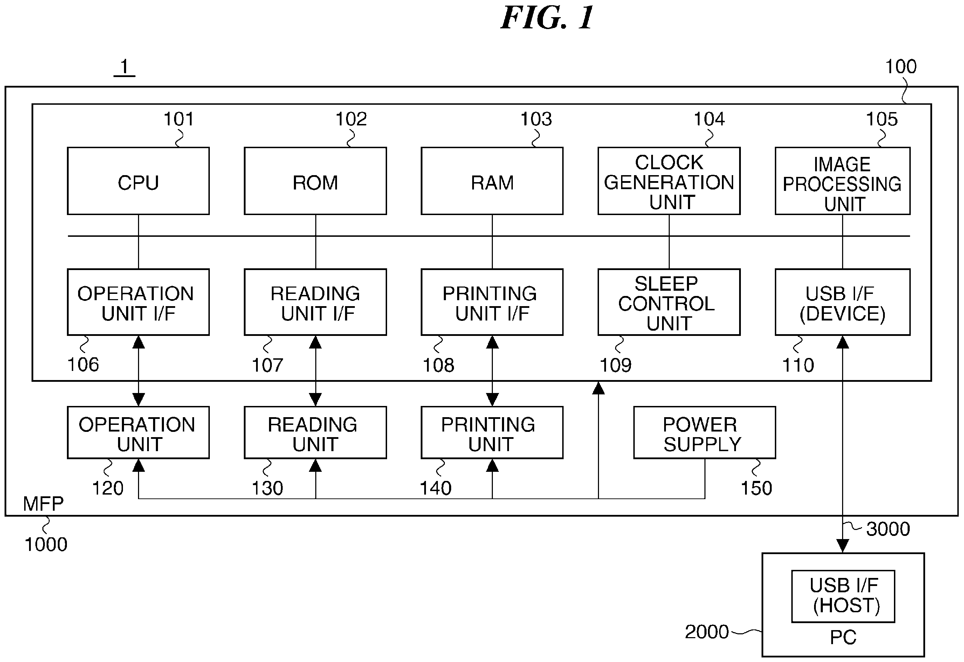

FIG. 1 shows a schematic configuration of an information processing system 1 including an image forming apparatus (hereinafter referred to as a multifunction peripheral (MFP)) 1000 serving as an information processing apparatus according to the embodiment of the present invention and a schematic configuration of the MFP 1000.

The MFP 1000 includes a controller 100, an operation unit 120, a reading unit 130, a printing unit 140, and a power supply 150.

The controller 100 controls the entire MFP 1000. The operation unit 120 receives an operation by a user, and displays various types of information to the user. The reading unit 130 reads a document, and generates image data of the document. The printing unit 140 prints the image represented by the image data on a recording medium such as paper. The power supply 150 supplies power to each of the units constituting the MFP 1000.

The controller 100 includes a central processing unit (CPU) 101, a read-only memory (ROM) 102, a random access memory (RAM) 103, a clock generation unit 104, an image processing unit 105, an operation unit interface 106, a reading unit interface 107, a printing unit interface 108, a sleep control unit 109, and a USB interface 110 according to a first embodiment.

The CPU 101 controls the controller 100, to control the entire MFP 1000. The ROM 102 stores various types of programs such as a boot program. The RAM 103 is used as a work area of the CPU 101, and stores various types of programs and various types of data. Various types of processing to be performed by the MFP 1000, shown in sequence diagrams and flowcharts described below, are implemented when the CPU 101 rasterizes the programs stored in the ROM 102 into the RAM 103.

The clock generation unit 104 generates a clock to each of the units in the controller 100, and supplies the generated clock thereto. The image processing unit 105 performs various types of image processing for the image data.

The operation unit interface 106 is an interface between the controller 100 and the operation unit 120. The reading unit interface 107 is an interface between the controller 100 and the reading unit 130. The printing unit interface 108 is an interface between the controller 100 and the printing unit 140.

The sleep control unit 109 performs control in a power saving state of the controller 100. The USB interface 110 controls USB communication. In the present embodiment, the MFP 1000 is connected to a USB interface in a personal computer (hereinafter referred to as "PC") 2000 serving as a host apparatus via a USB cable 3000.

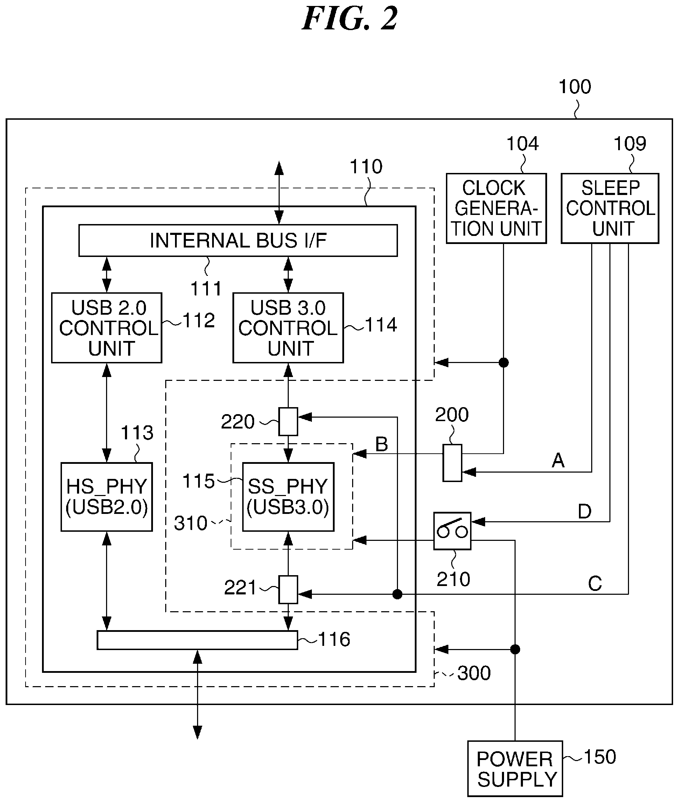

FIG. 2 shows a schematic configuration of the USB interface 110. In FIG. 2, the clock generation unit 104, the sleep control unit 109, and the power supply 150 are shown in addition to the USB interface 110.

The USB interface 110 includes an internal bus interface 111, a USB 2.0 control unit 112, an HS_PHY 113, a USB 3.0 control unit 114, an SS_PHY 115, a selection unit 116, and signal separation control units 220 and 221.

The internal bus interface 111 is an interface with an internal bus of the controller 100.

The USB 2.0 control unit 112 controls communication in USB 2.0 (a second communication mode). The HS_PHY 113 is a physical layer circuit (a second functional block) that performs communication at High Speed (HS) of USB 2.0.

The USB 3.0 control unit 114 controls communication in USB 3.0 (a first communication mode). The SS_PHY 115 is a physical layer circuit (a first functional block) that performs communication at Super Speed (SS) of USB 3.0. Power consumption in a state where the SS_PHY 115 operates (a first power state) is greater than power consumption in a state where the HS_PHY 113 operates (a second power state). The MFP 1000 is operable in either the first power state or the second power state.

The selection unit 116 selects either one of the communication in USB 2.0 and the communication in USB 3.0. A communication speed in USB 2.0 is lower than a communication speed in USB 3.0.

Each of the signal separation control units 220 and 221 separates boundary signals of areas 300 and 310. The areas 300 and 310 are areas supplied with power from the power supply 150. In the area 310, the SS_PHY 115 is supplied with the power, and in the area 300, units other than the SS_PHY 115 are supplied with the power.

The power supply control unit 210 can supply and stop supplying the power to the area 310. The clock generated by the clock generation unit 104 is supplied to each of the areas 300 and 310. At this time, a clock gate unit 200 can switch the supply and the stop of the supply of the clock from the clock generation unit 104 to the area 310.

The sleep control unit 109 is connected to the clock gate unit 200, the power supply control unit 210, and the signal separation control units 220 and 221, to control the units. In FIG. 2, contents of signals A to D to be transmitted via signal lines A, C, and D from the sleep control unit 109 and a signal line B from the signal separation control unit 220 will be described below.

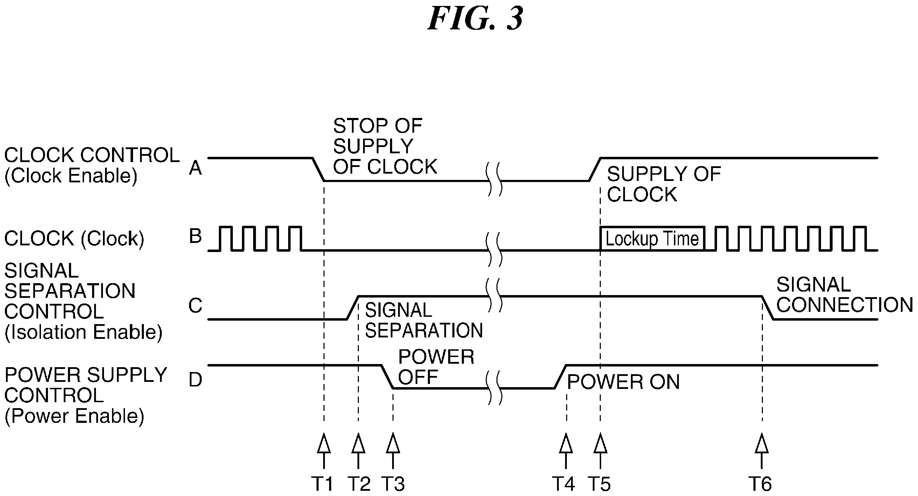

FIG. 3 is a timing chart of the signals A, B, C and D shown in FIG. 2. The signal A is a clock control signal from the sleep control unit 109 to the clock gate unit 200. The signal B is a clock signal from the clock gate unit 200 to the SS_PHY 115. The signal C is a signal separation control signal from the sleep control unit 109 to the signal separation control units 220 and 221. The signal D is a power supply control signal from the sleep control unit 109 to the power supply control unit 210.

At a timing T1 of shifting from a normal use state to a sleep state serving as a power saving state, the sleep control unit 109 first switches the clock control signal A from High to Low. If the clock control signal A is High, the clock signal B is supplied to the SS_PHY 115 from the clock gate unit 200. On the other hand, when the clock control signal A is Low, the clock signal B is not supplied to the SS_PHY 115 from the clock gate unit 200. Therefore, the supply of the clock to the SS_PHY 115 is stopped at the timing T1, as shown in FIG. 3.

At a timing T2 subsequent to the timing T1, the sleep control unit 109 switches the signal separation control signal C from Low to High. If the signal separation control signal C is High, each of the signal separation control units 220 and 221 performs signal separation. If the signal separation control signal C is Low, each of the signal separation control units 220 and 221 does not perform signal separation but performs signal connection. Therefore, the signal separation is performed at the timing T2 and later, as shown in the figure.

At a timing T3 subsequent to the timing T2, the sleep control unit 109 switches the power supply control signal D from High to Low. If the power supply control signal D is High, power is supplied to the SS_PHY 115 via the power supply control unit 210. If the power supply control signal D is Low, no power is supplied to the SS_PHY 115. Therefore, the supply of the power to the SS_PHY 115 is stopped at the timing T3, as shown in the figure.

Thus, at the timing T3, the MFP 1000 shifts to a sleep state. Then, at a timing T4 of occurrence of a sleep return factor such as a print request from the PC 2000, the sleep control unit 109 switches the power supply control signal D from Low to High. Therefore, the supply of the power to the SS_PHY 115 is resumed at the timing T4.

At a timing T5 subsequent to the timing T4, the sleep control unit 109 switches the clock control signal A from Low to High. Therefore, at the timing T5, the supply of the clock signal B is resumed after a lapse of a lock-up time, as shown in the figure. At a timing T6 after the lapse of the lock-up time, the sleep control unit 109 switches the signal separation control signal C from High to Low. Therefore, each of the signal separation control units 220 and 221 performs signal connection at the timing T6, as shown in the figure.

Thus, the MFP 1000 returns from the sleep state to the normal use state while connection in USB 3.0 is established between the PC 2000 and the MFP 1000.

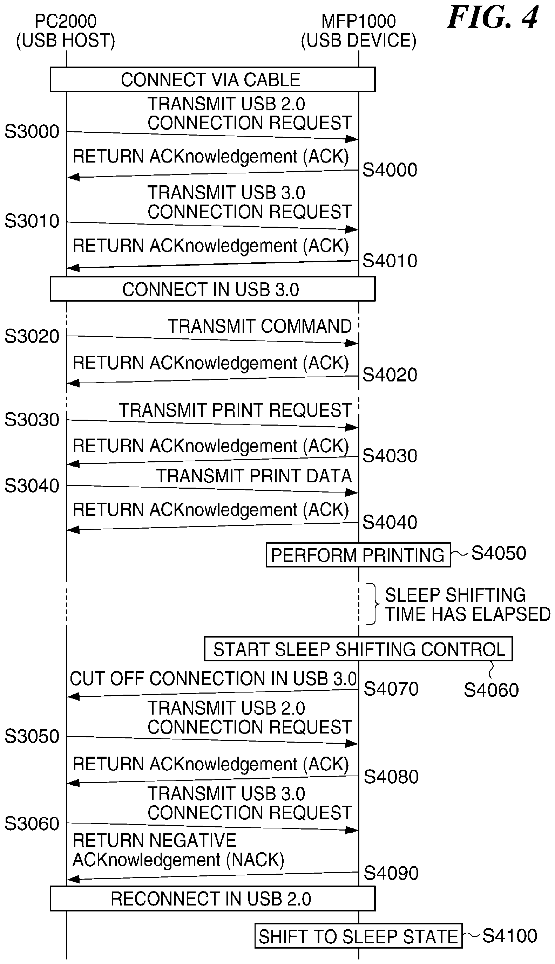

FIG. 4 is a sequence diagram showing a procedure performed when the MFP 1000 shifts to a sleep state.

When the PC 2000 and the MFP 1000 are connected to each other via the USB cable 3000, the PC 2000 serving as a USB host transmits a USB 2.0 connection request to the MFP 1000 in step S3000. In step S4000, the MFP 1000 returns an ACKnowledgement (ACK) to the PC 2000 as a response to the USB 2.0 connection request.

In step S3010, the PC 2000 then transmits a USB 3.0 connection request to the MFP 1000. In step S4010, the MFP 1000 corresponds to USB 3.0, and thus returns an ACK to the PC 2000 as a response to the USB 3.0 connection request. Thus, connection in USB 3.0 is established between the PC 2000 and the MFP 1000. The CPU 101 controls the USB interface 110, to specify a communication mode for communication performed via the USB cable 3000.

In step S3020, the PC 2000 then transmits a predetermined command to the MFP 1000. In step S4020, the MFP 1000 returns an ACK to the PC 2000. In step S3030, the PC 2000 then transmits a print request to the MFP 1000. In step S4030, the MFP 1000 returns an ACK to the PC 2000. In step S3040, the PC 2000 then transmits print data to the MFP 1000. In step S4040, the MFP 1000 receives the print data, and returns an ACK to the PC 2000. In step S4050, the MFP 1000 performs printing.

In step S4060, the MFP 1000 then starts sleep shifting control when a sleep shifting condition has been satisfied, e.g., a predetermined sleep shifting time has elapsed to shift to the sleep state. In step S4070, the MFP 1000 first cuts off the connection in USB 3.0 when it starts the sleep shifting control. Cutting off the connection in USB 3.0 is cutting off logical connection in software using a control program with the USB cable 3000 connected. The MFP 1000 and the PC 2000 remain connected to each other in the physical layer.

In step S3050, the PC 2000 transmits a USB 2.0 connection request to the MFP 1000 to establish connection again upon receipt of the cutting of the connection in USB 3.0. In step S4080, the MFP 1000 returns an ACK to the PC 2000 as a response to the USB 2.0 connection request.

In step S3060, the PC 2000 then transmits a USB 3.0 connection request to the MFP 1000. In step S4090, the MFP 1000 does not correspond to USB 3.0 when shifting to the sleep state, and returns a Negative ACKnowledgement (NACK) to the PC 2000 as a response to the USB 3.0 connection request. Thus, reconnection in USB 2.0 is established between the PC 2000 and the MFP 1000. In step S4100, the MFP 1000 then shifts to the sleep state.

In the MFP 1000 being in the sleep state, the power supply control unit 210 stops supplying the power to the area 310. Thus, the supply of the power to the SS_PHY 115 has been stopped. The clock gate unit 200 also stops supplying the clock generated by the clock generation unit 104 to the area 310. Thus, the supply of the clock to the SS_PHY 115 has also been stopped.

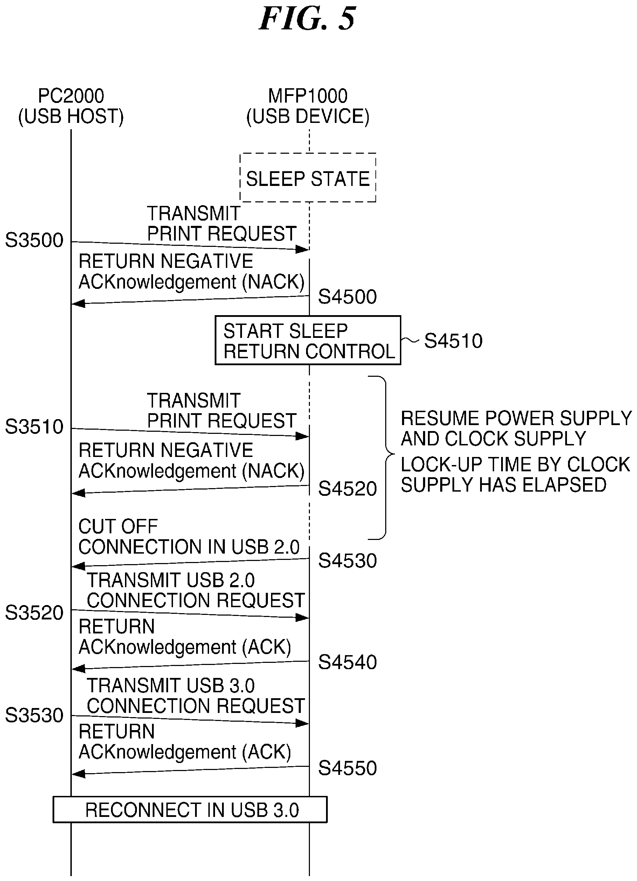

FIG. 5 is a sequence diagram showing a procedure performed when the MFP 1000 returns from the sleep state.

In step S3500, the PC 2000 transmits a print request to the MFP 1000 while the MFP 1000 is in the sleep state. In step S4500, the MFP 1000 returns an NACK to the PC 2000 because it is in the sleep state, and thus cannot cope with the print request.

In step S4510, the MFP 1000 starts sleep return control because the print request is a sleep return factor for the MFP 1000.

In the MFP 1000, when the sleep return control is started, the power supply control unit 210 resumes the supply of the power to the area 310. Thus, the supply of the power to the SS_PHY 115 is resumed. The clock gate unit 200 also resumes the supply of the clock generated by the clock generation unit 104 to the area 310. Thus, the supply of the clock to the SS_PHY 115 is also resumed. In step S3510, the PC 2000 transmits the print request to the MFP 1000 in a period to the time when a lock-up time elapses by the supply of the clock. In step S4520, the MFP 1000 returns a NACK to the PC 2000.

In step S4530, the MFP 1000 then logically cuts off the connection in USB 2.0, like in step S4070, in the sleep return control. In step S3520, the PC 2000 transmits a USB 2.0 connection request to the MFP 1000 to establish the connection again upon receipt of the cutting of the connection in USB 2.0. In step S4540, the MFP 1000 returns an ACK to the PC 2000 as a response to the USB 2.0 connection request.

In step S3530, the PC 2000 then transmits a USB 3.0 connection request to the MFP 1000. In step S4550, the MFP 1000 returns an ACK to the PC 2000 as a response to the USB 3.0 connection request because it corresponds to USB 3.0 after returning from the sleep state. Thus, reconnection in USB 3.0 is established between the PC 2000 and the MFP 1000. When the connection in USB 3.0 is established, the printing described in steps S3030 to S4050 shown in FIG. 4 can also be performed.

Processing of the MFP 1000 in the sequence diagrams of FIGS. 4 and 5 will be described below. In the following description, processing for shifting the MFP 1000 to the sleep state is called sleep shifting processing, and processing for shifting the MFP 1000 in the sleep state to the normal use state is called sleep return processing.

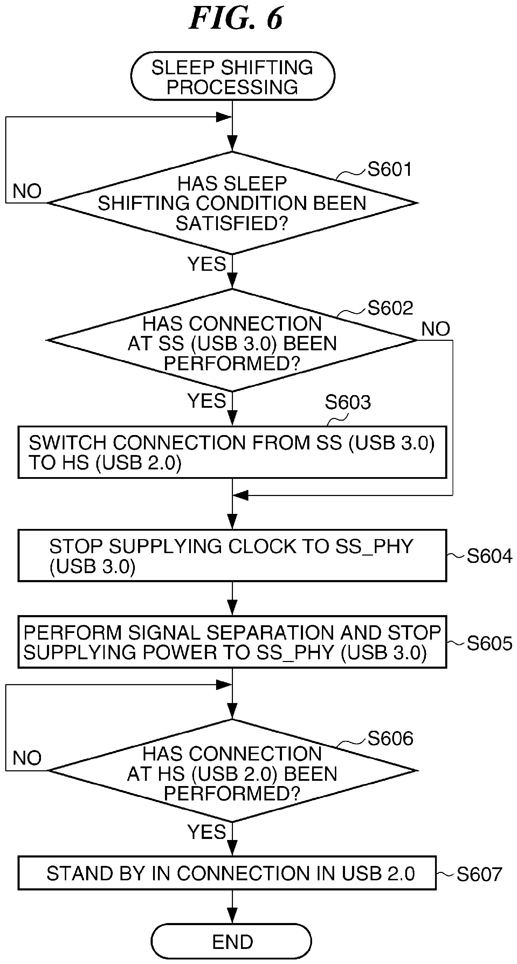

FIG. 6 is a flowchart of sleep shifting processing performed by the CPU 101 in the MFP 1000. In the following description, connection in USB 3.0 is merely represented as connection at SS, and connection in USB 2.0 is merely represented as connection at HS, as needed. Each of processes shown in FIG. 6 is implemented when the CPU 101 rasterizes the program stored in the ROM 102 into the RAM 103 and controls each of components in the controller 100.

In step S601, the CPU 101 determines whether a sleep shifting condition has been satisfied. If the CPU 101 determines that the sleep shifting condition has not been satisfied (NO in step S601), the CPU 101 repeats the determination in step S601. If the CPU 101 determines that the sleep shifting condition has been satisfied (YES in step S601), the processing proceeds to step S602.

In step S602, the CPU 101 determines whether connection at SS has been performed. If the CPU 101 determines that the connection at SS has been performed (YES in step S602), the processing proceeds to step S603. If the CPU 101 determines that the connection at SS has not been performed (NO in step S602), the processing proceeds to step S604.

In step S603, the CPU 101 switches the connection from the connection at SS to the connection at HS. In step S604, the CPU 101 then stops supplying a clock to the SS_PHY 115. The process in step S604 corresponds to the processing at the timing T1 shown in FIG. 3.

In step S605, the CPU 101 then causes each of the signal separation control units 220 and 221 to perform signal separation, and further stops supplying power to the SS_PHY 115. The process in step S605 corresponds to the processing at the timings T2 and T3 shown in FIG. 3.

In step S606, the CPU 101 then determines whether the connection at HS has been performed. If the CPU 101 determines that the connection at HS has been performed (YES in step S606), the processing proceeds to step S607. If the CPU 101 determines that the connection at HS has not been performed (NO in step S606), the CPU 101 repeats the determination in step S606. In step S607, the CPU 101 shifts the MFP 1000 to the sleep state, and stands by in the connection in USB 2.0. Thus, the processing ends. It should be noted that the processing shown in FIG. 6 corresponds to the processes in steps S4070 to S4090 shown in FIG. 4.

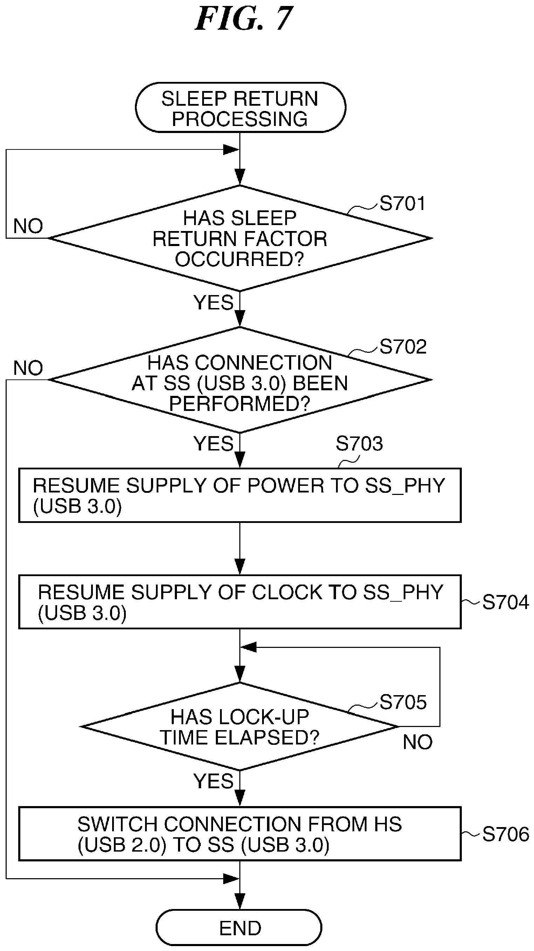

FIG. 7 is a flowchart of sleep return processing performed by the CPU 101 in the MFP 1000. Each of processes shown in FIG. 7 is implemented when the CPU 101 rasterizes the program stored in the ROM 102 into the RAM 103 and controls each of the components in the controller 100.

In step S701, the CPU 101 determines whether a sleep return factor has occurred. If the CPU 101 determines that the sleep return factor has occurred (YES in step S701), the processing proceeds to step S702. If the sleep return factor has not occurred (NO in step S701), the CPU 101 repeats the determination in step S701.

In step S702, the CPU 101 determines whether the sleep return factor is the connection at SS. If the CPU 101 determines that the sleep return factor is the connection at SS (YES in step S702), the processing proceeds to step S703. If the CPU 101 determines that the sleep return factor is not the connection at SS (NO in step S702), the connection at HS is maintained, and the processing ends.

In step S703, the CPU 101 resumes the supply of power to the SS_PHY 115. The process in step S703 corresponds to the processing at the timing T4 shown in FIG. 3.

In step S704, the CPU 101 then resumes the supply of a clock to the SS_PHY 115. The process in step S704 corresponds to the processing at the timing T5 shown in FIG. 3. In step S705, the CPU 101 then determines whether a lock-up time has elapsed. If the CPU 101 determines that the lock-up time has not elapsed (NO in step S705), the CPU 101 repeats the determination in step S705. If the CPU 101 determines that the lock-up time has elapsed (YES in step S705), the processing proceeds to step S706.

In step S706, the CPU 101 switches the connection from the connection at HS to the connection at SS. Then, the CPU 101 causes the processing to end. It should be noted that the processing shown in FIG. 7 corresponds to the processes in steps S4500 to S4550 shown in FIG. 5.

As described above, according to the present embodiment, if the USB cable 3000 is connected in the first communication mode, and the MFP 1000 shifts from the first power state to the second power state, the communication mode for the communication performed via the USB cable 3000 is shifted from the first communication mode at a high speed to the second communication mode at a low speed. Thus, the communication in the power saving state (sleep state) can be performed while the power consumption can be suppressed.

According to the present embodiment, when the MFP 1000 is in the sleep state, the MFP 1000 is also connected to the PC 2000 in USB 2.0. When the sleep return factor requiring the connection at SS occurs, therefore, the supply of the power to the SS_PHY 115 can quickly be resumed. The supply of the clock to the SS_PHY 115 is resumed, so that the communication in USB 3.0 can be performed again.

A USB interface according to a second embodiment will be described below. The USB interface according to the second embodiment differs from the USB interface 110 according to the first embodiment in that an HS_PHY 113 for USB 2.0 is also independent as a power supply area.

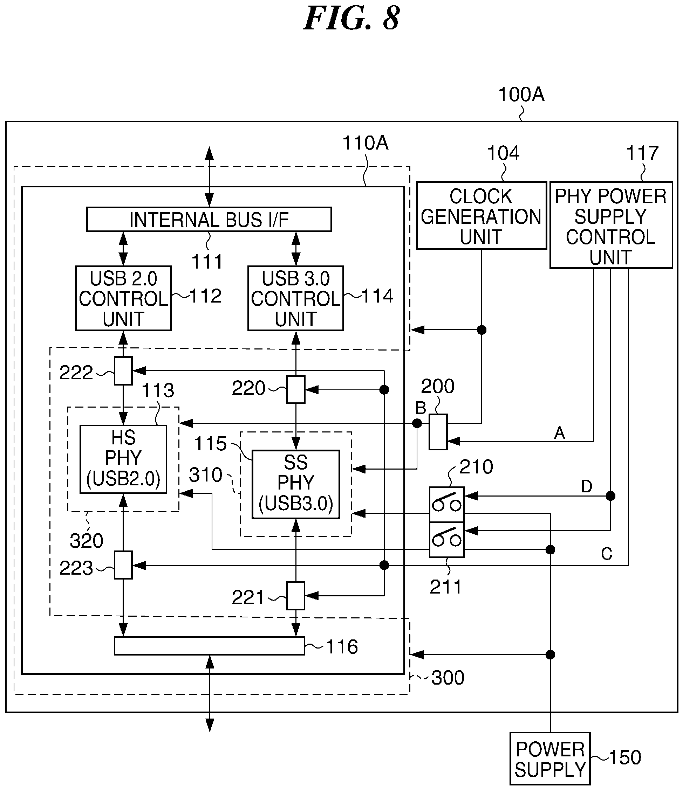

FIG. 8 shows a schematic configuration of a USB interface 110A according to the second embodiment. In FIG. 8, in a controller 100A including the USB interface 110A, the same components as those in the controller 100 including the USB interface 110 according to the first embodiment shown in FIG. 2 are assigned the same reference numerals, and hence an overlapped description is omitted.

The MFP 1000 shown in FIG. 1 can be equipped with the USB interface 110A according to the second embodiment instead of the USB interface 110 according to the first embodiment. The HS_PHY 113 included in the USB interface 110A is independent as an area 320 supplied with power from a power supply 150. The USB interface 110A includes signal separation control units 222 and 223. Each of the signal separation control units 222 and 223 separates boundary signals of areas 300 and 320. A similar power supply control unit 211 to the power supply control unit 210 can supply and stop supplying the power to the area 320.

A clock generated by a clock generation unit 104 is supplied to each of the areas 300, 310, and 320. A clock gate unit 200 can switch for each of the areas 310 and 320 the supply and the stop of the supply of the clock from the clock generation unit 104 to the areas 310 and 320.

A PHY power supply control unit 117 included in the controller 100A is connected to the clock gate unit 200, the power supply control units 210 and 211, and the signal separation control units 220, 221, 222, and 223, to control the units, similarly to the sleep control unit 109 included in the controller 100.

Therefore, signals A, B, C, and D shown in FIG. 8 can be controlled for each of the areas 310 and 320. It should be noted that the signals A to D shown in FIG. 8 are similar to the signals A to D shown in FIGS. 2 and 3. More specifically, the signal A is a clock control signal from the PHY power supply control unit 117 to the clock gate unit 200. The signal B is a clock signal from the clock gate unit 200 to an SS_PHY 115 and an HS_PHY 113. The signal C is a signal separation control signal from the PHY power supply control unit 117 to the signal separation control units 220, 221, 222, and 223. The signal D is a power supply control signal from the PHY power supply control unit 117 to the power supply control units 210 and 211. Accordingly, while the timing chart of FIG. 3 is independent for each of the areas 310 and 320, a relationship among the signals is the same between the areas 310 and 320.

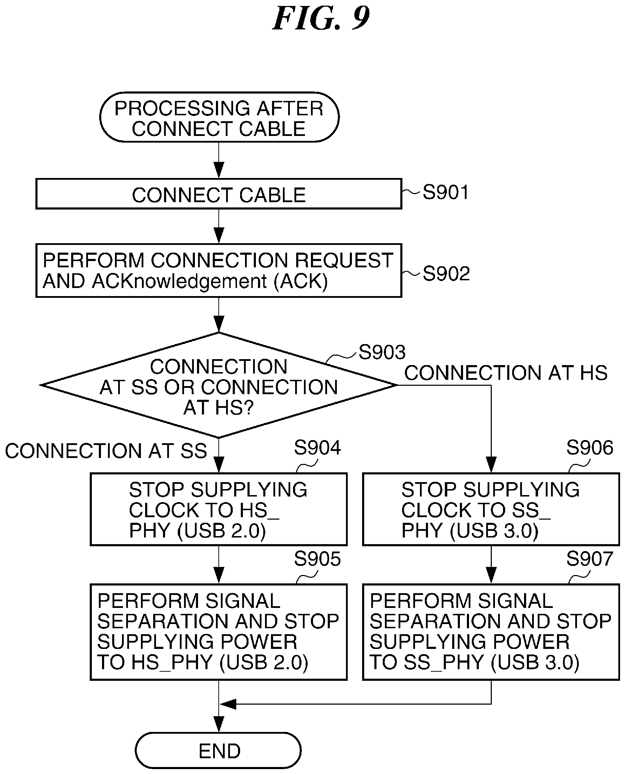

FIG. 9 is a flowchart of processing after connection via a USB cable performed by the MFP 1000 including the controller 100A. Connection in USB 3.0 is merely represented as connection at SS, and connection in USB 2.0 is merely represented by connection at HS, as needed.

In step S901, the USB cable is connected. In step S902, at least the connection request in step S3000 and the ACK in step S4000 shown in FIG. 4 are performed. Thus, connection is established between the MFP 1000 and the PC 2000. In step S903, it is then determined whether the connection request in step S3010 and the ACK in step S4010 shown in FIG. 4 have been performed.

Processes in step S903 and the subsequent steps are processing performed inside the MFP 1000, and are implemented when the CPU 101 rasterizes a program stored in the ROM 102 into the RAM 103 and controls each of components in the controller 100A.

In step S903, the CPU 101 determines whether a USB connection request from the PC 2000 is for the connection at SS or the connection at HS. If the CPU 101 receives the USB connection request for the connection at SS, the processing proceeds to step S904. If the CPU 101 receives the USB connection request for the connection at HS, the processing proceeds to step S906.

In step S904, the CPU 101 stops supplying a clock to the HS_PHY 113. In step S905, the CPU 101 then causes each of the signal separation control units 222 and 223 to perform signal separation, and stops supplying power to the HS_PHY 113.

In step S906, the CPU 101 stops supplying a clock to the SS_PHY 115. In step S907, the CPU 101 then causes each of the signal separation control units 220 and 221 to perform signal separation, and stops supplying power to the SS_PHY 115. When the steps S905 and S907 end, the processing ends. Thus, the CPU 101 stops supplying the power to one, which is not used, of the HS_PHY 113 and the SS_PHY 115, so that power saving can be achieved.

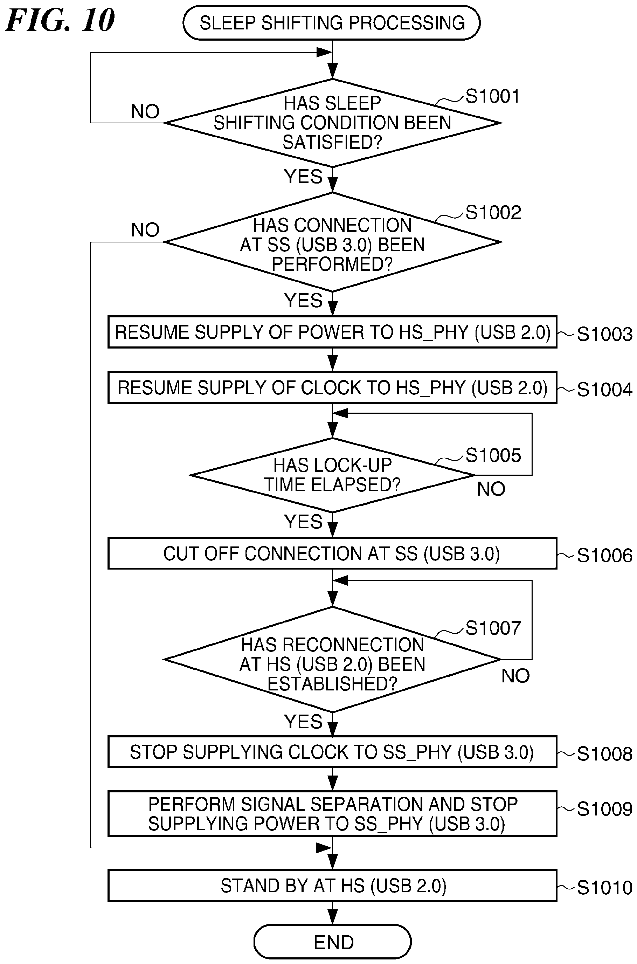

FIG. 10 is a flowchart of first sleep shifting processing performed by the CPU 101 in the MFP 1000 including the controller 100A. Each of processes shown in FIG. 10 is implemented when the CPU 101 rasterizes the program stored in the ROM 102 into the RAM 103 and controls each of the components in the controller 100A.

In step S1001, the CPU 101 determines whether a sleep shifting condition has been satisfied. If the CPU 101 determines that the sleep shifting condition has not been satisfied (NO in step S1001), the CPU 101 repeats the determination in step S1001. If the CPU 101 determines that the sleep shifting condition has been satisfied (YES in step S1001), the processing proceeds to step S1002.

In step S1002, the CPU 101 determines whether connection at SS has been performed. If the CPU 101 determines that the connection at SS has been performed (YES in step S1002), the processing proceeds to step S1003. If the CPU 101 determines that the connection at SS has not been performed (NO in step S1002), the processing proceeds to step S1010.

In step S1003, the CPU 101 resumes the supply of the power to the HS_PHY 113. In step S1004, the CPU 101 then resumes the supply of the clock to the HS_PHY 113. In step S1005, the CPU 101 then determines whether a lock-up time has elapsed. If the CPU 101 determines that the lock-up time has not elapsed (NO in step S1005), the CPU 101 repeats the determination in step S1005. If the CPU 101 determines that the lock-up time has elapsed (YES in step S1005), the processing proceeds to step S1006.

In step S1006, the CPU 101 cuts off the connection at SS. It should be noted that cutting off the connection at SS is cutting off logical connection in software using a control program with the USB cable 3000 connected. The MFP 1000 and the PC 2000 remain connected to each other in a physical layer.

In step S1007, the CPU 101 then determines whether reconnection at HS has been established in response to a USB connection request issued again. If the CPU 101 determines that the reconnection at HS has not been established (NO in step S1007), the CPU 101 repeats the determination in step S1007. If the reconnection at HS has been established (YES in step S1007), the processing proceeds to step S1008.

In step S1008, the CPU 101 stops supplying the clock to the SS_PHY 115. In step S1009, the CPU 101 then causes each of the signal separation control units 220 and 221 to perform signal separation, and further stops supplying the power to the SS_PHY 115.

In step S1010, the CPU 101 then stands by in the connection at HS (i.e., connection in USB 2.0). It should be noted that a case where the processing proceeds from step S1002 to step S1010 is a case where it is determined in step S1002 that the connection at HS has been performed. Thus, the CPU 101 directly shifts to a stand-by state in step S1010, so that the connection at HS is maintained. The processing ends through step S1010.

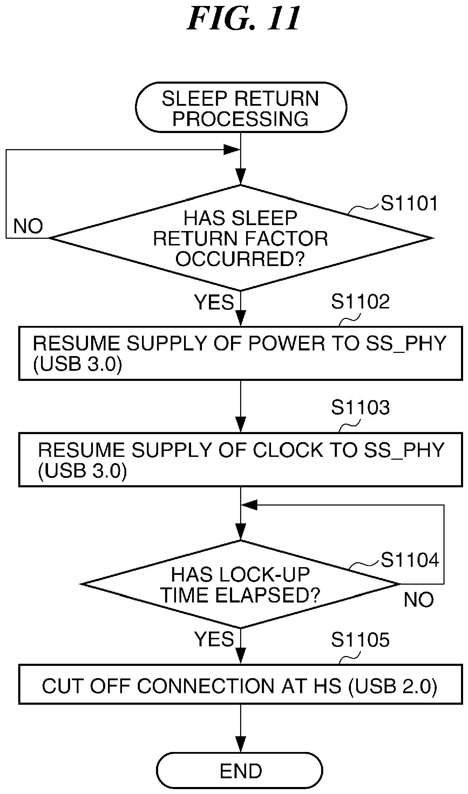

FIG. 11 is a flowchart of first sleep return processing performed by the CPU 101 in the MFP 1000 including the controller 100A. The first sleep return processing is return processing from a sleep state after the above-mentioned first sleep shifting processing. Each of processes shown in FIG. 11 is implemented when the CPU 101 rasterizes the program stored in the ROM 102 into the RAM 103 and controls each of the components in the controller 100A.

In step S1101, the CPU 101 determines whether a sleep return factor has occurred when in the sleep state. The sleep return factor includes pressing of a button of an operation panel (not shown) in the MFP 1000 and receiving of a print job from the PC 2000 via the USB interface 110A. It should be noted that the MFP 1000 includes a network interface (I/F), which is not shown in FIG. 1, and is communicable with an external apparatus on a network via the network I/F. Thus, the sleep return factor also includes receiving of the print job via the network I/F.

If the CPU 101 determines that the sleep return factor has not occurred (NO in step S1101), the CPU 101 repeats the determination in step S1101. If the CPU 101 determines that the sleep return factor has occurred (YES in step S1101), the processing proceeds to step S1102.

In step S1102, the CPU 101 resumes the supply of the power to the SS_PHY 115. In step S1103, the CPU 101 then resumes the supply of the clock to the SS_PHY 115. In step S1104, the CPU 101 determines whether a lock-up time has elapsed. If the CPU 101 determines that the lock-up time has not elapsed (NO in step S1104), the CPU 101 repeats the determination in step S1104. If the CPU 101 determines that the lock-up time has elapsed (YES in step S1104), the processing proceeds to step S1105.

In step S1105, the CPU 101 cuts off the connection at HS. Cutting off the connection at HS is cutting off logical connection in software using a control program with the USB cable connected. The MFP 1000 and the PC 2000 remain connected to each other in a physical layer.

The processing ends through step S1105. Then, the processing after the connection via the USB cable, as described in FIG. 9, is then started again. As described in FIG. 5, the MFP 1000 returns a NACK to the PC 2000 until it returns from the sleep state and returns an ACK as a response to the connection request after it has returned from the sleep state.

As described above, the USB interface 110A according to the second embodiment stops, when the USB cable is connected, supplying the clock and the power to a PHY in a communication mode that is not a communication mode in which the USB cable is connected. Thus, power consumption in a normal use state, which is not the sleep state, can be suppressed.

Second sleep shifting processing and second sleep return processing, which are performed by the MFP 1000 including the USB interface 110A according to the second embodiment will be described below. The second sleep shifting processing differs from the above-mentioned first sleep shifting processing in that connection information is stored during shifting to a sleep state.

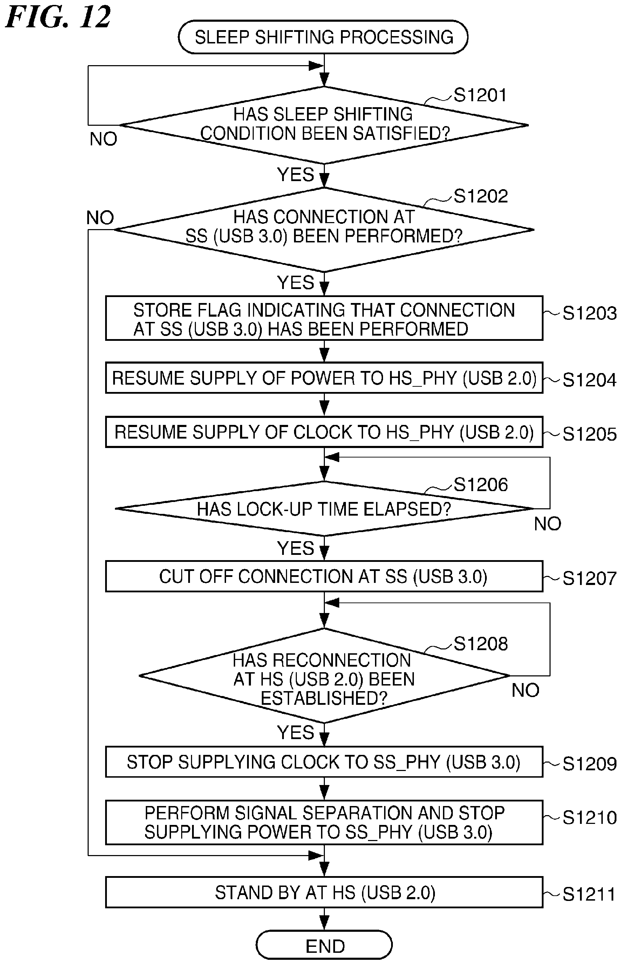

FIG. 12 is a flowchart of the second sleep shifting processing performed by the CPU 101 in the MFP 1000 including the controller 100A. Each of processes shown in FIG. 12 is implemented when the CPU 101 rasterizes the program stored in the ROM 102 into the RAM 103 and controls each of the components in the controller 100A.

Processing contents in steps S1201 and S1202 are the same as the processing contents in steps S1001 and S1002 shown in FIG. 10, and hence description thereof is not repeated. If the CPU 101 determines that the connection at SS has been performed (YES in step S1202), the processing proceeds to step S1203. If the CPU 101 determines that the connection at SS has not been performed (NO in step S1202), the processing proceeds to step S1211.

In step S1203, the CPU 101 stores a flag indicating that the connection at SS has been performed in the RAM 103. Processing contents in the subsequent steps S1204 to S1211 are the same as the processing contents in steps S1003 to S1010 shown in FIG. 10, and hence description thereof is not repeated.

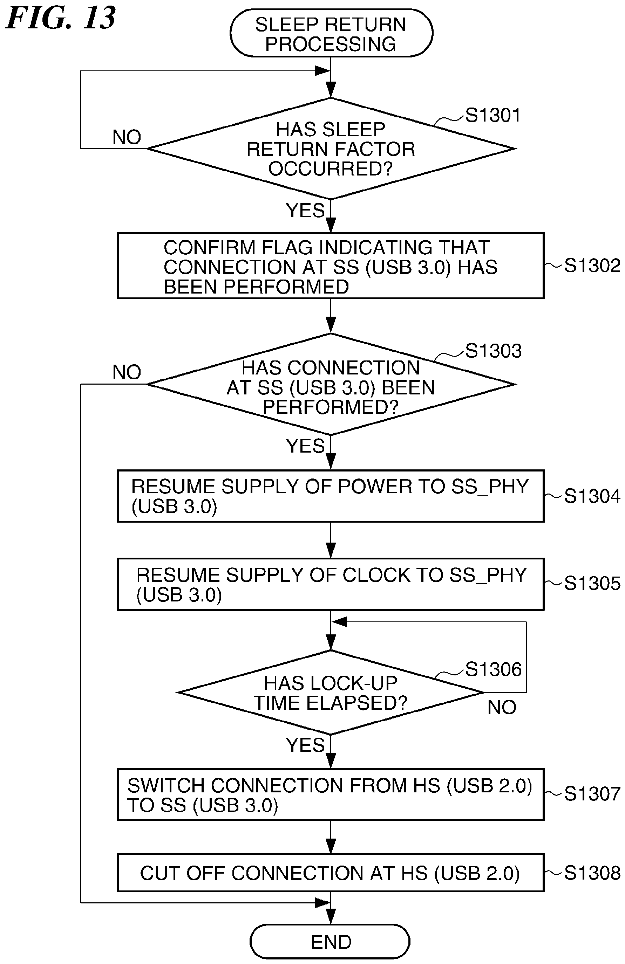

FIG. 13 is a flowchart of second sleep return processing performed by the CPU 101 in the MFP 1000 including the controller 100A. The second sleep return processing is return processing from a sleep state after the above-mentioned second sleep shifting processing. Each of processes shown in FIG. 13 is implemented when the CPU 101 rasterizes the program stored in the ROM 102 into the RAM 103 and controls each of the components in the controller 100A.

A processing content in steps S1301 is the same as the processing content in step S1101 shown in FIG. 11. More specifically, in step S1301, the CPU 101 determines whether a sleep return factor has occurred when in the sleep state. If the CPU 101 determines that the sleep return factor has not occurred (NO in step S1301), the CPU 101 repeats the determination in step S1301. If the CPU 101 determines that the sleep return factor has occurred (YES in step S1301), the processing proceeds to step S1302.

In step S1302, the CPU 101 then confirms the flag stored in step S1203. In step S1303, the CPU 101 determines whether the flag has existed in step S1302 (i.e., the connection at SS has been performed before shifting to the sleep state). If the CPU 101 determines that the flag has existed (YES in step S1303), the processing proceeds to step S1304. On the other hand, if the CPU 101 determines that the flag has not existed, i.e., the connection at HS has been performed (NO in step S1303), the connection at HS is maintained, and the processing ends.

In step S1203, the CPU 101 stores only the flag indicating that the connection at SS has been performed. However, the present invention is not limited to this. In step S1203, the CPU 101 may store either one of the flag indicating that the connection at SS has been performed and a flag indicating that the connection at HS has been performed. In this case, in step S1303, the CPU 101 may determine whether the flag, which has been confirmed in step S1302, is the flag indicating that the connection at SS has been performed or the flag indicting that the connection at HS has been performed.

Processing contents in steps S1304 to S1306 are the same as the processing contents in steps S1102 to S1104 shown in FIG. 11, and hence description thereof is not repeated. In step S1307 performed subsequently to a case where it is determined in step S1306 that the look-up time has elapsed (YES in step S1306), the CPU 101 switches the connection from the connection at HS to the connection at SS. In step S1308, the CPU 101 then cuts off the connection at HS.

It should be noted that the processing content in step S1308 is the same as the processing content in step S1105 shown in FIG. 11. The processing ends through step S1308. Then, the processing after the connection via the USB cable described in FIG. 9 is started again.

According to the above-mentioned second sleep shifting processing and the second sleep return processing, the communication mode in which the connection is performed during shifting to the sleep state is stored. If the connection at HS has been performed before shifting to the sleep state, the MFP 1000 can return to the normal use state in a short time without the connection via the USB being cut off during return from the sleep state.

While USB 2.0 and USB 3.0 have been used in the above-mentioned description of the present embodiment, the present embodiment is also applicable even in another communication standard if a plurality of circuits, which differ in power consumption, is provided.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)(TM)), a flash memory device, a memory card, and the like.

While the present invention has been described with reference to exemplary embodiments, it is to be understood that the invention is not limited to the disclosed exemplary embodiments.

## Claims

1. An information processing apparatus capable of performing communication in any one of a plurality of communication modes including at least a first communication mode, and a second communication mode at a lower speed than that in the first communication mode, via a USB cable, the information processing apparatus comprising:
a USB interface unit (110) configured to communicate with an external apparatus via the USB cable, the USB interface unit having
a first communication unit (115) corresponding to the first communication mode and
a second communication unit (113) corresponding to the second communication mode;
the apparatus **characterized by**
a power supply control unit (117) configured to control power supply to the first communication unit and the second communication unit; and
a detection unit (101) configured to detect whether a shifting condition for the information processing apparatus to shift from a normal use state to a power saving state has been satisfied,
wherein in the case where the information processing apparatus operates in a normal use state, the USB interface unit communicates with the external apparatus in the first communication mode, and in a case where the information processing apparatus operates in the power saving state, the USB interface unit communicates with the external apparatus in the second communication mode, and
wherein in a case where the detection unit (101) has detected that the shifting condition was satisfied said power supply control unit (117) stops supplying power to said first communication unit and starts supplying power to the second communication unit.

2. The information processing apparatus according to claim 1, wherein in a case where the information processing apparatus shifts from the power saving state to the normal use sate, the power supply control unit (117) starts supplying power to the first communication unit and stops supplying power to the second communication unit.

3. The information processing apparatus according to claim 1 or claim 2,
wherein the first communication unit (115) is a physical layer circuit corresponding to the first communication mode, and
the second communication unit (113) is a physical layer circuit corresponding to the second communication mode.

4. The information processing apparatus according to any one of claims 1 to 3,
wherein the first communication mode is a communication mode in which communication based on Super Speed of USB 3.0 is performed, and
the second communication mode is a communication mode in which communication based on High Speed of USB 2.0 is performed.

5. The information processing apparatus according to any one of claims 1 to 4, wherein the information processing apparatus is a printing apparatus.

6. A method for controlling an information processing apparatus including a USB interface unit (110) configured to communicate with an external apparatus via a USB cable, the USB interface unit having a first communication unit (115)capable of performing communication in a first communication mode and a second communication unit (113)capable of performing communication in a second communication mode at a lower speed than that in the first communication mode, via the USB cable, the method comprising:
a detecting step of detecting whether a shifting condition for the information processing apparatus to shift from a normal use state to a power saving state has been satisfied; and
a switching step of switching communication mode such that in the case where the information processing apparatus operates in a normal use state, the USB interface unit communicates with the external apparatus in the first communication mode, and in a case where the information processing apparatus operates in the power saving state, the USB interface unit communicates with the external apparatus in the second communication mode,
a power supply controlling step of, in a case where the detection unit (101) has detected that the shifting condition was satisfied, stopping supplying power to the first communication unit and starting supplying power to the second communication unit.

7. A non-transitory computer readable storage medium storing a program for causing a computer to implement the method of claim 6.

## Patentansprüche

1. Informationsverarbeitungsvorrichtung, die in der Lage ist, eine Kommunikation über ein USB-Kabel in einem von mehreren Kommunikationsmodi durchzuführen, welche mindestens einen ersten Kommunikationsmodus und einen zweiten Kommunikationsmodus bei geringerer Geschwindigkeit als derjenigen des ersten Kommunikationsmodus beinhalten, wobei die Informationsverarbeitungsvorrichtung umfasst:
eine USB-Schnittstelleneinheit (110), die konfiguriert ist, über das USB-Kabel mit einer externen Vorrichtung zu kommunizieren, wobei die USB-Schnittstelleneinheit aufweist:
eine dem ersten Kommunikationsmodus entsprechende erste Kommunikationseinheit (115) und
eine dem zweiten Kommunikationsmodus entsprechende zweite Kommunikationseinheit (113);
wobei die Vorrichtung **gekennzeichnet ist durch**:
eine Energiezufuhrsteuereinheit (117), die konfiguriert ist, eine Energiezufuhr zur ersten Kommunikationseinheit und zur zweiten Kommunikationseinheit zu steuern; und
eine Detektionseinheit (101), die konfiguriert ist, zu detektieren, ob eine Umschaltbedingung für die Informationsverarbeitungsvorrichtung, von einem Normalbetriebszustand in einen Energiesparzustand umzuschalten, erfüllt worden ist,
wobei die USB-Schnittstelleneinheit mit der externen Vorrichtung im ersten Kommunikationsmodus kommuniziert, falls die Informationsverarbeitungsvorrichtung im Normalbetriebszustand arbeitet, und die USB-Schnittstelleneinheit mit der externen Vorrichtung im zweiten Kommunikationsmodus kommuniziert, falls die Informationsverarbeitungsvorrichtung im Energiesparzustand arbeitet, und
wobei die Energiezufuhrsteuereinheit (117) die Energiezufuhr zur ersten Kommunikationseinheit stoppt und mit der Energiezufuhr zur zweiten Kommunikationseinheit beginnt, falls die Detektionseinheit (101) detektiert hat, dass die Umschaltbedingung erfüllt wurde.

2. Informationsverarbeitungsvorrichtung nach Anspruch 1, wobei die Energiezufuhrsteuereinheit (117) mit der Energiezufuhr zur ersten Kommunikationseinheit beginnt und die Energiezufuhr zur zweiten Kommunikationseinheit stoppt, falls die Informationsverarbeitungsvorrichtung vom Energiesparzustand in den Normalbetriebszustand umschaltet.

3. Informationsverarbeitungsvorrichtung nach Anspruch 1 oder Anspruch 2, wobei
die erste Kommunikationseinheit (115) eine dem ersten Kommunikationsmodus entsprechende Physical-Layer-Schaltung ist, und
die zweite Kommunikationseinheit (113) eine dem zweiten Kommunikationsmodus entsprechende Physical-Layer-Schaltung ist.

4. Informationsverarbeitungsvorrichtung nach einem der Ansprüche 1 bis 3, wobei
der erste Kommunikationsmodus ein Kommunikationsmodus ist, bei dem eine Kommunikation basierend auf USB-3.0-SuperSpeed durchgeführt wird, und
der zweite Kommunikationsmodus ein Kommunikationsmodus ist, bei dem eine Kommunikation basierend auf USB-2.0-HighSpeed durchgeführt wird.

5. Informationsverarbeitungsvorrichtung nach einem der Ansprüche 1 bis 4, wobei die Informationsverarbeitungsvorrichtung eine Druckvorrichtung ist.

6. Verfahren zum Steuern einer Informationsverarbeitungsvorrichtung mit einer USB-Schnittstelleneinheit (110), die konfiguriert ist, über ein USB-Kabel mit einer externen Vorrichtung zu kommunizieren, wobei die USB-Schnittstelleneinheit eine erste Kommunikationseinheit (115) aufweist, welche in der Lage ist, über das USB-Kabel eine Kommunikation in einem ersten Kommunikationsmodus durchzuführen, und eine zweite Kommunikationseinheit (113) aufweist, welche in der Lage ist, über das USB-Kabel eine Kommunikation in einem zweiten Kommunikationsmodus bei geringerer Geschwindigkeit als derjenigen des ersten Kommunikationsmodus durchzuführen, wobei das Verfahren umfasst:
einen Detektionsschritt des Detektierens, ob eine Umschaltbedingung für die Informationsverarbeitungsvorrichtung, von einem Normalbetriebszustand in einen Energiesparzustand umzuschalten, erfüllt worden ist; und
einen Umschaltschritt des Umschaltens des Kommunikationsmodus derart, dass die USB-Schnittstelleneinheit mit der externen Vorrichtung im ersten Kommunikationsmodus kommuniziert, falls die Informationsverarbeitungsvorrichtung im Normalbetriebszustand arbeitet, und die USB-Schnittstelleneinheit mit der externen Vorrichtung im zweiten Kommunikationsmodus kommuniziert, falls die Informationsverarbeitungsvorrichtung im Energiesparzustand arbeitet,
einen Energiezufuhrsteuerschritt des Stoppens der Energiezufuhr zur ersten Kommunikationseinheit und des Beginnens mit der Energiezufuhr zur zweiten Kommunikationseinheit, falls die Detektionseinheit (101) detektiert hat, das die Umschaltbedingung erfüllt wurde.

7. Nichtflüchtiges computerlesbares Speichermedium, das ein Programm speichert, welches einen Computer veranlasst, das Verfahren nach Anspruch 6 zu implementieren.

## Revendications

1. Appareil de traitement d'informations capable d'effectuer une communication dans l'un quelconque d'une pluralité de modes de communication comportant au moins un premier mode de communication et un deuxième mode de communication à un plus faible débit que celui utilisé dans le premier mode de communication, par l'intermédiaire d'un câble USB, l'appareil de traitement d'informations comprenant :
une unité d'interface USB (110) configurée pour communiquer avec un appareil externe par l'intermédiaire du câble USB, l'unité d'interface USB ayant
une première unité de communication (115) correspondant au premier mode de communication et
une deuxième unité de communication (113) correspondant au deuxième mode de communication ;
l'appareil étant **caractérisé par**
une unité de commande d'alimentation électrique (117) configurée pour commander l'alimentation électrique de la première unité de communication et de la deuxième unité de communication ; et
une unité de détection (101) configurée pour détecter si une condition de basculement pour que l'appareil de traitement d'informations bascule d'un état d'utilisation normal à un état d'économie d'énergie a été respectée,
dans lequel, dans le cas où l'appareil de traitement d'informations fonctionne dans un état d'utilisation normal, l'unité d'interface USB communique avec l'appareil externe dans le premier mode de communication, et dans un cas où l'appareil de traitement d'informations fonctionne dans l'état d'économie d'énergie, l'unité d'interface USB communique avec l'appareil externe dans le deuxième mode de communication, et
dans lequel, dans un cas où l'unité de détection (101) a détecté que la condition de basculement a été respectée, ladite unité de commande d'alimentation électrique (117) cesse d'alimenter en électricité ladite première unité de communication et commence à alimenter en électricité la deuxième unité de communication.

2. Appareil de traitement d'informations selon la revendication 1, dans lequel, dans un cas où l'appareil de traitement d'informations bascule de l'état d'économie d'énergie à l'état d'utilisation normal, l'unité de commande d'alimentation électrique (117) commence à alimenter en électricité la première unité de communication et cesse d'alimenter en électricité la deuxième unité de communication.

3. Appareil de traitement d'informations selon la revendication 1 ou la revendication 2,
dans lequel la première unité de communication (115) est un circuit de couche physique correspondant au premier mode de communication, et
la deuxième unité de communication (113) est un circuit de couche physique correspondant au deuxième mode de communication.

4. Appareil de traitement d'informations selon l'une quelconque des revendications 1 à 3,
dans lequel le premier mode de communication est un mode de communication dans lequel une communication basée sur le Super Débit de l'USB 3.0 est effectuée, et
le deuxième mode de communication est un mode de communication dans lequel une communication basée sur le Haut Débit de l'USB 2.0 est effectuée.

5. Appareil de traitement d'informations selon l'une quelconque des revendications 1 à 4, dans lequel l'appareil de traitement d'informations est un appareil d'impression.

6. Procédé destiné à commander un appareil de traitement d'informations comportant une unité d'interface USB (110) configurée pour communiquer avec un appareil externe par l'intermédiaire d'un câble USB, l'unité d'interface USB ayant une première unité de communication (115) capable d'effectuer une communication dans un premier mode de communication et une deuxième unité de communication (113) capable d'effectuer une communication dans un deuxième mode de communication à un plus faible débit que celui utilisé dans le premier mode de communication, par l'intermédiaire du câble USB, le procédé comprenant :
une étape de détection consistant à détecter si une condition de basculement pour que l'appareil de traitement d'informations bascule d'un état d'utilisation normal à un état d'économie d'énergie a été respectée ; et
une étape de changement consistant à changer de mode de communication de façon que, dans le cas où l'appareil de traitement d'informations fonctionne dans un état d'utilisation normal, l'unité d'interface USB communique avec l'appareil externe dans le premier mode de communication, et dans un cas où l'appareil de traitement d'informations fonctionne dans l'état d'économie d'énergie, l'unité d'interface USB communique avec l'appareil externe dans le deuxième mode de communication,
une étape de commande d'alimentation électrique consistant, dans un cas où l'unité de détection (101) a détecté que la condition de basculement a été respectée, à cesser d'alimenter en électricité la première unité de communication et à commencer à alimenter en électricité la deuxième unité de communication.

7. Support de stockage non volatil lisible par ordinateur stockant un programme destiné à amener un ordinateur à mettre en oeuvre le procédé selon la revendication 6.
